(19) Europäisches Patentamt / European Patent Office / Office européen des brevets

(11) **EP 2 128 962 A2**

(12) **DEMANDE DE BREVET EUROPEEN**

(43) Date de publication:
**02.12.2009 Bulletin 2009/49**

(51) Int Cl.:
*H02K 1/22* (2006.01)

(21) Numéro de dépôt: **09157737.9**

(22) Date de dépôt: **09.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.05.2008 FR 0853165**

(71) Demandeur: **Valeo Equipements Electriques Moteur**
**94046 Creteil Cedex (FR)**

(72) Inventeur: **Kadiri, Mostafa**
**62520 Le Touquet (FR)**

(74) Mandataire: **de Lambilly Delorme, Marie Pierre**
**Valéo Equipements Electriques Moteur**
**Propriété Industrielle**
**2, rue André-Boulle**
**94046 Créteil Cedex (FR)**

(54) **Machine électrique tournante avec aimants incorporés au rotor**

(57)     La présente invention concerne une machine électrique tournante. Le rotor (20) de cette machine comporte des aimants permanents (A1, A2, A3) disposés dans le noyau (28) et/ou dans les roues polaires (23a, 23b). La longueur totale d'aimant (L) sur le chemin magnétique (29) de la machine électrique tournante est choisie en sorte que le ratio (R) entre longueur totale d'aimant (L) et entrefer total ($j_T$ + 2e) est compris entre 8 et 12.

FIG.2.

EP 2 128 962 A2

**Description**

La présente invention concerne de manière générale les machines électriques tournantes.

Plus particulièrement, l'invention concerne des machines électriques tournantes de type alternateur ou alterno-démarreur, destinées aux véhicules automobiles.

Et plus particulièrement encore, l'invention concerne les machines électriques tournantes dont le rotor comporte un ou plusieurs bobinages d'excitation, des pôles magnétiques, et des aimants permanents disposés en son sein.

L'invention sera décrite en référence à une machine électrique tournante avec un rotor à griffes, mais l'invention concerne également d'autres types de machines telles que des machines comportant un rotor à pôles saillants ; la solution proposée venant renforcer le flux magnétique déjà polarisé par une excitation bobinée.

Typiquement, le rotor a une structure à griffes. Une telle structure est constituée de deux roues polaires, opposées et imbriquées, chacune comprenant des griffes. Les roues polaires sont dites opposées en ce sens que chaque griffe d'une roue polaire s'étend axialement en direction de l'autre roue polaire. De plus, les roues polaires sont dites imbriquées en ce sens que chaque griffe d'une roue polaire s'insère entre deux griffes consécutives de la roue polaire opposée. En outre, le rotor comporte un noyau agencé dans un espace délimité par les surfaces de chaque griffe tournées vers l'axe de rotation du rotor, et qui s'étend axialement entre les roues polaires. Le rotor comporte des aimants situés dans le noyau, et le bobinage d'excitation est enroulé autour.

Le rotor est agencé dans un stator de la machine électrique tournante. Lorsque la machine tournante est en fonctionnement, le rotor tourne autour de son axe, et un flux magnétique circule entre les pôles magnétiques adjacents deux à deux qui sont de polarités respectives opposées, en passant par des enroulements du stator.

Dans les machines électriques à griffes, une partie du flux magnétique s'échappe du chemin décrit ci-avant. En particulier, une partie du flux ne chemine pas par les enroulements du stator et passe directement d'une griffe d'une roue polaire à une griffe adjacente de l'autre roue polaire. Cette partie du flux n'est donc pas utile à la production d'énergie dans la machine.

Cette fuite de flux d'un pôle à l'autre sans passer par le stator affecte le rendement, et pénalise les performances en puissance de la machine.

On connait des rotors de machines électriques tournantes dans lesquels un aimant annulaire est incorporé au noyau. Une tranchée circonférentielle est réalisée sur la surface externe du noyau, afin de recevoir l'aimant annulaire. Les aimants disposés dans le noyau permettent de créer un flux magnétique qui augmente le flux utile de la machine.

Lorsque la bobine d'excitation est parcourue par un courant d'excitation faible, voire nul, le noyau n'est pas saturé en flux électromagnétique. Les lignes de flux du flux magnétique produit par l'aimant se rebouclent alors sur elles-mêmes tout en restant confinées dans le noyau.

Lorsque la bobine d'excitation est parcourue par un courant d'excitation important, le noyau est saturé en flux magnétique. Les lignes de flux du flux magnétique produit par l'aimant ne peuvent alors pas rester confinées dans le noyau. Afin de se reboucler, les lignes de flux suivent le chemin du flux électromagnétique utile au fonctionnement de la machine. Ce chemin passe par une roue polaire, ressort par une griffe de cette roue, et passe dans les enroulements du stator avant d'entrer de nouveau dans le rotor par une griffe adjacente de polarité opposée à celle de la première griffe, de l'autre roue polaire et enfin boucle par le noyau.

L'adjonction d'aimants au noyau constitue néanmoins un surcoût pour la machine, principalement lié au coût de la matière primaire dont les aimants sont faits. Il faut donc veiller à respecter un compromis entre augmentation du flux utile et limitation du coût de la machine en raison des aimants.

De plus, si la masse d'aimant est trop importante, et lorsque le noyau est très saturé, l'extinction du courant nécessite un « défluxage » préalable. Cela implique une gestion particulière du fonctionnement de la machine, ce qui la rend plus complexe.

La présente invention vise à pallier les inconvénients précités en permettant de limiter la masse et donc ainsi le coût des aimants.

A cet effet, la présente invention propose une machine électrique tournante comportant un stator et un rotor agencé au sein de ce stator de manière à pouvoir entrer en rotation autour d'un axe de rotation. Le rotor comporte deux roues polaires comprenant, chacune, une série de griffes polaires. Ces griffes polaires ont une section longitudinale sensiblement trapézoïdale. Ces griffes polaires s'étendent axialement depuis une roue polaire en direction de l'autre roue polaire. Le rotor comporte en outre un noyau agencé dans un espace délimité par les surfaces internes des griffes des roues polaires. Ce noyau s'étend axialement entre les roues polaires. Un bobinage d'excitation est enroulé autour du rotor. Au moins un aimant est disposé, au sein du noyau, de manière à ce que la direction d'alignement de ses pôles magnétiques soit axiale, ou au sein d'une roue polaire, de manière à ce que la direction d'alignement de ses pôles magnétiques soit radiale. Un ratio entre une première longueur totale d'aimant et une deuxième longueur correspondant à la somme entre les distances axiales ou radiales, séparant chaque face de chaque aimant, d'une surface, de noyau ou de roue polaire, directement en regard, et le double de la distance radiale entre une extrémité radiale externe des griffes du rotor et une extrémité interne du stator, est compris environ entre 8 et environ 12.

La machine électrique tournante peut comporter un ou plusieurs aimants. La première longueur correspond à une longueur totale d'aimant. Cette longueur étant mesurée suivant le chemin du flux magnétique utile de la machine électrique tournante.

La deuxième longueur correspond à une longueur d'entrefer total vu par le flux magnétique utile de la machine électrique tournante.

Ainsi, les aimants apportent un flux additionnel au flux utile de la machine électrique tournante, qui est significatif pour les performances de la machine et qui est optimisé d'un point de vue économique.

La plage de valeurs entre 8 et 12, environ, pour le rapport de longueurs tient notamment compte de la diversité de matériaux convenables pour la fabrication des aimants. En particulier, elle tient compte de la perméabilité magnétique relative du matériau utilisé.

Lorsque l'on choisit une valeur pour ce rapport qui est sensiblement en dessous de 8, l'effet des aimants n'est pas significatif pour le fonctionnement de la machine. Ainsi, le coût des aimants n'est pas justifié du point de vue de la performance. Lorsque l'on choisit une valeur pour ce rapport qui est sensiblement au dessus de 12, la matière d'aimant nécessaire devient trop coûteuse par rapport à l'amélioration du flux utile apportée.

Dans un mode de réalisation de la présente invention, un ratio entre un premier volume total d'aimant disposé au sein du rotor, et un deuxième volume de matière du rotor, est compris entre 20% et 30%.

Cette plage de valeurs confère au circuit magnétique une réluctance minimale. Cela permet de diminuer la fenêtre de bobinage par rapport à une machine de l'art antérieur, pour un même flux magnétique donné. Ou encore, cela permet d'augmenter le flux magnétique de la machine par rapport à une machine de l'art antérieur, pour une même fenêtre de bobinage donnée.

Ainsi, par exemple, en réduisant les dimensions du noyau, il est possible de réduire le bobinage qui est à l'origine de pertes énergétiques par effet Joule.

Dans un autre mode de réalisation de la présente invention, pour chaque griffe polaire, la longueur de la base radiale la plus large est supérieure à la distance radiale entre une extrémité externe du noyau et une extrémité externe de l'axe de rotation du rotor.

En effet, lorsque le rotor entre en rotation autour de son axe, les griffes subissent des efforts mécaniques dus à la centrifugation.

Dans les machines de l'art antérieur, la largeur de la base radiale des griffes est limitée par la longueur radiale de fenêtre de bobinage. Ainsi, dans l'art antérieur, il est prévu de réaliser une base de griffe de même dimension que la largeur radiale de noyau entre l'axe du rotor et l'extrémité externe du noyau. On pénalise donc la tenue mécanique des griffes pour conserver de la puissance électrique.

Avec le mode de réalisation envisagé ici, il est possible de renforcer les griffes en élargissant leur base. Ainsi, elles sont plus résistantes à la rupture par centrifugation.

De plus, en élargissant la base des griffes, on augmente leur volume. Ainsi, les griffes sont moins saturées en flux magnétique que les griffes des machines de l'art antérieur. Cela limite les fuites interpolaires, et par conséquent améliore les performances de la machine.

Dans d'autres modes de réalisation, on peut prévoir que les aimants sont disposés de manière régulière autour de l'axe de rotation.

Ainsi, le rotor est équilibré en inertie, et son comportement dynamique n'est pas perturbé par la présence des aimants.

On peut également prévoir que l'aimant est (ou les aimants sont) complètement noyé(s) dans le noyau et/ou dans la roue polaire.

Ainsi, lorsque le courant d'excitation parcourant le bobinage d'excitation est faible, les lignes de flux issues de l'aimant restent confinées dans le noyau, sans risque qu'elles soient vues par le stator.

En effet, lorsque le courant d'excitation est faible, le flux de la machine doit également être faible. Il faut donc, dans ce cas, éviter que l'aimant apporte une contribution au flux utile.

Cette disposition permet d'améliorer les performances nominales de la machine électrique tournante, sans détériorer son fonctionnement à faible saturation du noyau. De plus, cela évite de concevoir un contrôle particulier du courant d'excitation.

Selon les modes de réalisation, l'aimant peut avoir une forme globalement parallélépipédique, ou encore une forme globalement cylindrique, ou encore une forme globale de portion de tore.

Toutes ces géométries d'aimants offrent l'avantage d'une simplicité de réalisation, et d'incorporation dans le noyau ou dans les roues polaires.

Selon des modes de réalisation, l'aimant est en terres rares ou en ferrites.

Ces matériaux offrent un apport en flux conséquent, et ont un coût approprié à leur utilisation.

Dans des modes de réalisation, le noyau et/ou la roue polaire est en acier.

Ce matériau offre un bon compromis entre performances magnétiques et tenue mécanique. De plus, il est possible de privilégier l'aspect mécanique du rotor, en particulier la tenue mécanique des griffes, en incorporant du carbone à l'acier.

Un autre aspect de la présente invention concerne une machine électrique tournante agencée pour fonctionner en alternateur ou en alterno-démarreur.

L'invention sera mieux comprise à la lecture de la description qui va suivre, donnée uniquement à titre d'exemple, et faite en se référant aux dessins annexés dans lesquels :

- La figure 1 est une vue selon un plan de coupe longitudinal d'une machine électrique tournante selon un mode de réalisation de l'invention,

- la figure 2 est une vue selon un plan de coupe longitudinal du rotor d'une machine électrique tournante selon un mode de réalisation de l'invention,

- la figure 3 illustre l'évolution du flux magnétique de la machine électrique tournante en fonction du courant d'excitation dans le bobinage d'excitation, pour une machine électrique tournante selon l'invention, et pour une machine électrique tournante ne comportant pas d'aimant dans le rotor,

- la figure 4 illustre, pour une machine électrique tournante selon un mode de réalisation de l'invention, des lignes de champs d'un aimant dans le noyau dans le cas où le noyau est saturé, et dans le cas où le noyau n'est pas saturé,

- la figure 5 illustre, pour une machine électrique tournante selon un mode de réalisation de l'invention, l'évolution du rapport champ magnétique de la machine électrique tournante sur champ magnétique résiduel en fonction du rapport longueur totale d'aimant sur entrefer total,

- la figure 6 illustre, pour une machine électrique tournante selon un mode de réalisation de l'invention, l'évolution de la réluctance du circuit magnétique de la machine électrique tournante en fonction du rapport volume d'aimant au noyau sur volume d'acier du noyau,

- la figure 7 illustre les fenêtres de bobinage pour une machine électrique tournante de l'art antérieur et pour une machine électrique tournante selon la présente invention,

- la figure 8 illustre une roue polaire accolée à un demi-noyau comportant des aimants parallélépipédiques selon un mode de réalisation de l'invention,

- la figure 9 est une vue selon un plan de coupe transversale d'un noyau de rotor de machine électrique tournante selon un mode de réalisation de l'invention où les aimants sont cylindriques,

- la figure 10 est une vue selon un plan de coupe transversale d'un noyau de rotor de machine électrique tournante selon un mode de réalisation de l'invention où les aimants sont en forme de portion de tore,

- la figure 11 est une vue en perspective d'un aimant en forme de portion de tore.

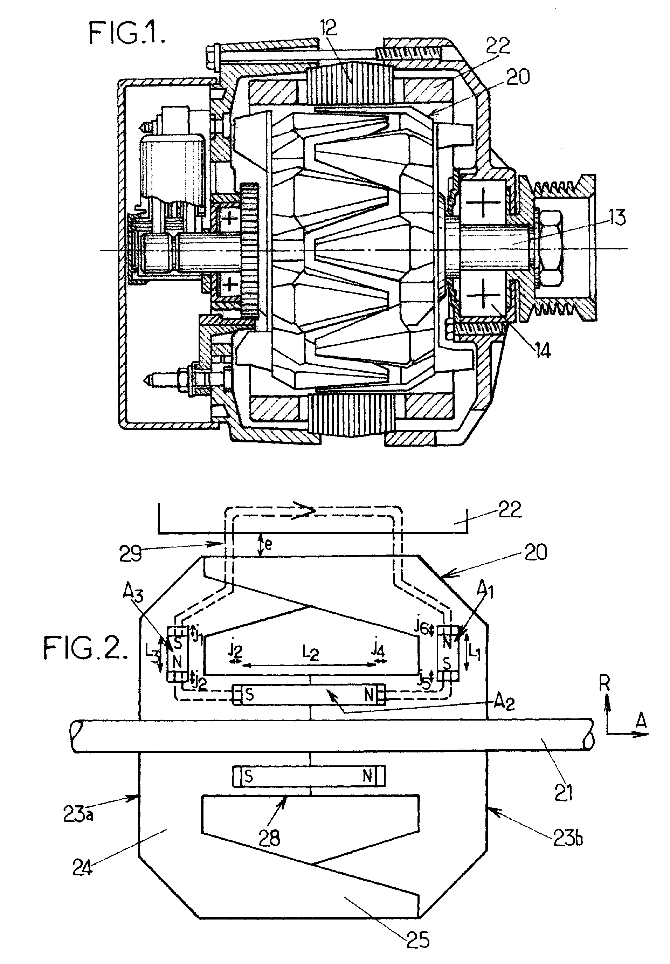

Une machine électrique tournante selon la présente invention est représentée selon un plan de coupe longitudinal sur la figure 1. Cette machine électrique tournante est par exemple un alternateur du type polyphasé, pour véhicule automobile à moteur thermique. Bien entendu, l'alternateur peut aussi être réversible, et consister en un alterno-démarreur, pouvant fonctionner en mode alternateur ou en mode moteur électrique, notamment pour démarrer le moteur thermique du véhicule.

Cette machine électrique tournante comporte un rotor 20, agencé dans un stator 22. Ce stator comporte un bobinage 12 dans lequel, en fonctionnement, un courant électrique induit est produit. Le rotor est agencé de sorte à pouvoir entrer en rotation autour de son axe 21. Cette rotation est permise grâce notamment à des roulements à billes 14, disposés sur l'axe du rotor et fixés à la structure de la machine électrique tournante. Le rotor est décrit plus en détails en référence à la figure 2.

Le rotor comprend au moins un axe de symétrie. Cet axe correspond à l'axe de rotation du rotor. Dans la présente description, on dénomme ainsi « direction axiale » et « direction radiale », des directions telles qu'indiquées par les flèches "A" et "R", respectivement, de la figure 2.

On dénomme également élément intérieur, un élément qui se trouve du côté de l'axe. On dénommera également élément extérieur, un élément qui se trouve d'un côté opposé à l'axe.

La figure 2 montre un rotor 20 comportant un arbre central 21, appelé arbre de rotor, et un stator 22 qui entoure le rotor. Dans l'exemple représenté, le rotor 20 est réalisé sous forme d'un rotor à griffes comprenant deux roues polaires 23a, 23b, ici axialement juxtaposées. Chaque roue présente un flasque transversal 24 de forme annulaire. Ce flasque transversal est pourvu, à sa périphérie extérieure, de griffes polaires 25 s'étendant sensiblement axialement.

Un entrefer annulaire noté e, existe entre la face périphérique extérieure des griffes polaires 25 et la périphérie intérieure du corps du stator 22. Il correspond à la distance radiale en entre une extrémité externe des griffes polaires et une extrémité interne du stator.

Les griffes 25 ont une section longitudinale de forme globalement trapézoïdale ou triangulaire. Les griffes de chacune des roues polaires 23a, 23b sont dirigées axialement vers le flasque 24 de l'autre roue polaire 23a, 23b. En outre, la griffe 25 d'une roue polaire 23a, 23b pénètre dans l'espace existant entre deux griffes 25 adjacentes de l'autre roue polaire 12a, 12b. Ainsi, les griffes 25 des roues polaires 23a, 23b sont imbriquées.

Le rotor 20 comprend en outre un noyau 28 qui s'étend entre les roues polaires 23a, 23b, dans un espace délimité par les surfaces des griffes 25 tournées vers l'axe de rotation du rotor. Un bobinage d'excitation (non représenté) est enroulé autour du noyau 28. Ici, le noyau 28 comporte deux demi-noyaux, chacun s'étendant à partir d'une des deux roues polaires 23a, 23b.

Des aimants A1, A2, A3 sont disposés sur le chemin magnétique 29 emprunté par le flux magnétique utile de la machine électrique en fonctionnement.

Les aimants A1, A3 sont de forme parallélépipédique. L'aimant A1 est situé dans la roue polaire 23b, et l'aimant A3 est situé dans la roue polaire 23a. Ces aimants A1, A3 sont disposés de sorte que l'axe d'orientation de leurs pôles magnétiques est parallèle au chemin magnétique dans la zone dans laquelle il se trouve. Ainsi, pour chaque aimant, le chemin magnétique 29 entre par le pôle nord de l'aimant et ressort par le pôle sud de l'aimant.

L'aimant A2 est de forme annulaire, et se trouve noyé dans le noyau 28. Il est agencé de sorte à encercler l'axe 21 du rotor. Il est en outre agencé de sorte à ce que l'axe d'orientation de ses pôles magnétiques est parallèle au chemin 29 du flux magnétique de la machine dans la zone où il se trouve. Ainsi, le chemin magnétique entre par le pôle nord de l'aimant A2 et ressort par le pôle sud de cet aimant.

Les aimants A1, A2, A3 ont des longueurs respectives L1, L2, L3. Les longueurs L1, L3 des aimants A1, A3 sont des longueurs radiales. La longueur L2 de l'aimant A2 est une longueur axiale. La disposition de chaque aimant dans le rotor fait apparaître un espace sur le chemin du flux magnétique entre une face de l'aimant et une paroi interne du rotor. Ces espaces, ou jeux, se trouvent sur le chemin magnétique de part et d'autre de chaque aimant. Ainsi, l'aimant A1 fait apparaître deux jeux J6 et J5, l'aimant A2 fait apparaître deux jeux J3 et J4, et l'aimant A3 fait apparaître deux jeux J1 et J2.

Chacun des aimants A1, A2, A3 fournit un flux magnétique additionnel, qui renforce le flux magnétique utile de la machine électrique tournante. Leur disposition permet, lorsque la machine est en fonctionnement, de canaliser dans le chemin magnétique 29 de la machine électrique tournante, les lignes de flux du flux magnétique créé par chacun des aimants.

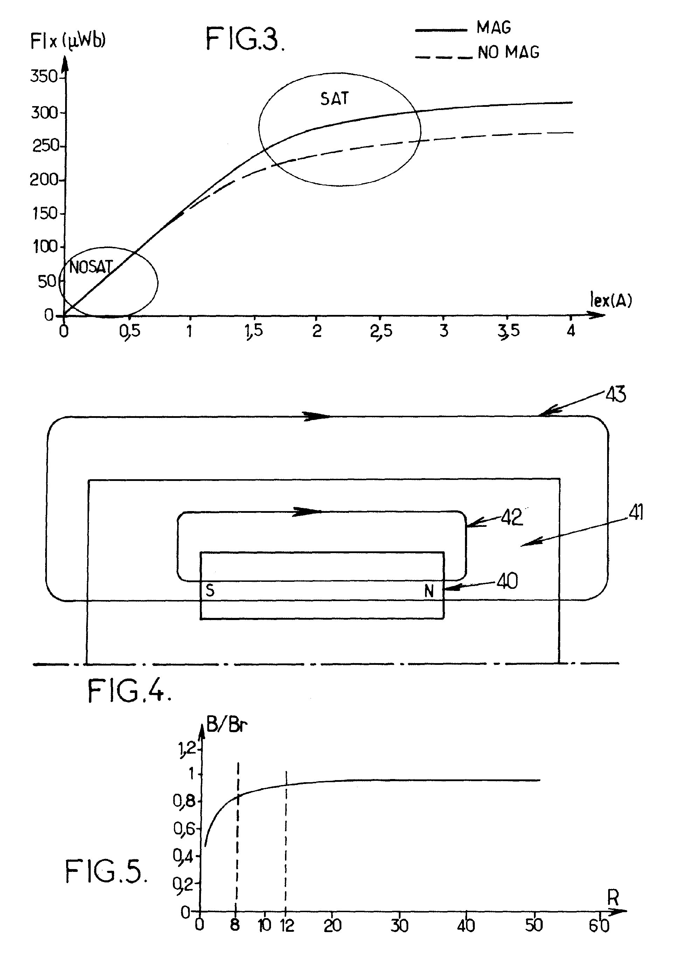

L'apport en flux de ces aimants est illustré sur le graphique de la figure 3. Sur ce graphique, on a représenté en abscisses le courant d'excitation en Ampères qui parcourt la bobine d'excitation enroulée autour du noyau du rotor. En ordonnées, on a représenté le flux magnétique, en micro Webers, de la machine électrique tournante qui circule dans les roues polaires du rotor et dans le stator. La courbe en trait plein MAG montre l'évolution du flux magnétique de la machine électrique tournante selon l'invention en fonction du courant d'excitation parcourant la bobine de cette même machine. La courbe en pointillé NOMAG montre l'évolution du flux magnétique d'une machine électrique tournante ne comportant pas d'aimant au sein de son rotor en fonction du courant d'excitation parcourant une bobine d'excitation de cette machine électrique. Le graphique de la figure 3 fait apparaître deux zones NOSAT et SAT. La zone NOSAT correspond à un courant d'excitation faible, et correspond donc une saturation en flux magnétique faible du noyau et des roues polaires de la machine électrique tournante. La zone SAT, quant à elle, représente une zone où le courant d'excitation est élevé et correspond donc la saturation en flux magnétique du noyau et des roues polaires est également élevée.

Le graphique de la figure 3 permet de comparer le flux magnétique de la machine électrique tournante selon l'invention au flux magnétique d'une machine électrique ne comportant pas d'aimant. On peut voir que dans la zone NOSAT les aimants ne perturbent pas le fonctionnement de la machine électrique tournante selon l'invention. En effet, on peut voir que les courbes de flux de la machine selon l'invention et de la machine ne comportant pas d'aimant en son noyau sont identiques. En revanche, dans la zone SAT, on peut noter que le flux magnétique de la machine électrique tournante selon l'invention est supérieur au flux magnétique de la machine électrique tournante ne comportant pas d'aimant en son noyau.

La différence d'apport en flux des aimants noté pour la machine selon la présente invention entre les zones NOSAT et SAT est expliquée en référence à la figure 4.

Sur cette figure, on a représenté une portion d'aimant 40 noyé dans une portion de noyau 41. En outre, on a représenté sur la figure 4 deux lignes de flux 42, 43 qui sont des lignes de flux du flux magnétique issu de l'aimant 40. La ligne 42 est une ligne de flux lorsque le noyau 41 n'est pas saturé, c'est-à-dire lorsque le courant d'excitation parcourant la bobine d'excitation est faible. Ce cas correspond à la zone NOSAT de la figure 3. La ligne 43 correspond, quant à elle, à une ligne du flux magnétique issu de l'aimant lorsque le noyau 41 est saturé en flux magnétique. Cette ligne correspond au cas de la zone SAT de la figure 3.

Ainsi, on peut voir que lorsque le noyau 41 n'est pas saturé en flux magnétique, les lignes de flux issues de l'aimant 40 restent confinées dans le noyau. De cette manière, elles ne passent pas vers le stator et ne modifient pas le comportement de la machine électrique tournante à faible excitation. Par contre, lorsque le noyau 41 est saturé en flux magnétique, les lignes de flux issues de l'aimant 40 sont canalisées dans le chemin du flux magnétique utile de la machine électrique tournante, et passent vers le stator.

En référence à la figure 5, on décrit le dimensionnement de la longueur totale des aimants A1, A2, A3 disposés au sein du rotor de la machine électrique tournante selon la présente invention. Pour commenter cette figure, on introduit les notations qui suivent. On note L la distance totale d'aimant prise sur le chemin magnétique de la machine électrique tournante. En d'autres termes, la distance L correspond à la somme des longueurs d'aimants, soit axiales ou soit radiales, suivant la disposition de ces aimants dans le rotor. Ainsi, ici L = L1 + L2 + L3. On note $J_T$ le jeu total entre les aimants et le rotor. Ainsi, ici, $J_T = j_1 + j_2 + j_3 + j_4 + j_5 + j_6$. On note R le ratio entre la longueur L et la somme du le jeu total $j_T$ et de l'entrefer total 2e vu sur le chemin magnétique 29 :

$$R = \frac{L}{2e + j_T} .$$

Dans la suite, on décrit l'expression du rapport entre le champ magnétique dans les aimants et le champ résiduel en fonction de R. A cet effet on applique de manière connue par l'homme du métier le théorème d'Ampère sur le chemin magnétique moyen emprunté par les lignes du flux magnétique utile de la machine. On fait toutes les approximations nécessaires. En particulier, on supposera que les sections d'aimants perpendiculaires au chemin magnétique utile de la machine électrique tournante sont les mêmes pour tous les aimants. On supposera également que la section de passage des lignes de flux dans l'entrefer est égale aux sections d'aimants.

Le principe de conservation du flux magnétique sur le chemin magnétique 29, permet d'écrire:

$$\Phi = B_1 S_1 = B_2 S_2 = B_3 S_3 = B_e S_e = B_j S_j ,$$

avec le couple $B_x$, $S_x$ se rapportant respectivement aux champs magnétique et surfaces de passage du flux magnétique des aimants A1-A3, de l'entrefer e, et des différents jeux.

Ainsi, par notre approximation sur les surfaces $S_x$ on peut conclure que le champ magnétique régnant au sein de chacun des aimants A1, A2, A3 et le champ magnétique régnant dans l'entrefer et dans les jeux respectifs induits par la position des aimants dans le noyau est le même, i.e. $B_1 = B_2 = B_3 = B_e = B_j$. On note ce champ B.

Ensuite, par application du théorème d'Ampère sur le chemin magnétique 29, on peut écrire:

$$\oint \vec{H} d\vec{l} = NI .$$

Dans cette équation, N représente le nombre de spires du bobinage entourées par le chemin du flux magnétique, et I représente le courant d'excitation circulant dans le bobinage. Le vecteur H représente l'excitation magnétique sur le chemin des lignes de flux magnétique de la machine électrique tournante. Le produit de N par I correspond à la force magnétomotrice de la machine électrique tournante.

En faisant les hypothèses classiques que d'une part l'excitation magnétique est nulle hors des volumes d'aimants, de l'entrefer et des jeux, et que d'autre part que le champs magnétique est proportionnel à l'excitation magnétique, on peut écrire la relation suivante :

$$B\left(\frac{2e + j_T}{\mu_0} + \frac{L}{\mu_a}\right) = NI ,$$

Où $\mu_0$ et $\mu_a$ représentent respectivement les perméabilités magnétiques du vide et des aimants. Dans la suite, on introduit la perméabilité magnétique relative des aimants $\mu_{a,r}$.

Ensuite, on introduit le champ magnétique résiduel. Celui-ci correspond au champ magnétique dans les aimants, dans l'hypothèse où il n'y aurait ni entrefer, ni jeux (e = 0, $j_i$ = 0). Dans ce cas, toujours par application du théorème d'Ampère, on peut écrire :

$$B_r = \frac{\mu_a N I}{L},$$

On peut donc écrire pour la machine électrique tournante :

$$\frac{B}{B_r} = \frac{1}{1 + \dfrac{\mu_{a,r}}{R}}.$$

Bien entendu, cette expression est donnée à titre illustratif. En réalité, les phénomènes en jeu ne permettent pas une modélisation aussi simple. Cependant des résultats expérimentaux permettent de confirmer la tendance du graphique de la figure 5.

Ainsi, on peut voir que la variation du rapport champ magnétique sur champ résiduel en fonction du ratio R fait intervenir la perméabilité magnétique relative de l'aimant.

Cette perméabilité magnétique relative peut avoir différentes valeurs selon le matériau d'aimant utilisé. Cependant, la perméabilité magnétique relative d'un aimant est généralement comprise entre 1,03 et 1,1. Ainsi, pour tracer le graphique de la figure 5, on a utilisé une perméabilité magnétique relative égale à 1. Néanmoins, en prenant d'autres valeurs, réalistes, pour la perméabilité magnétique relative, on obtiendrait une courbe très similaire.

Comme on peut le voir sur le graphique de la figure 5, le rapport entre champ magnétique de l'aimant et champ magnétique résiduel est croissant avec les valeurs du ratio R. Cependant, on peut noter que pour un ratio inférieur à 8, le champ magnétique de l'aimant est assez faible par rapport à son champ magnétique résiduel. Pour des valeurs du ratio supérieur à 12, on peut noter que le champ magnétique de l'aimant varie très peu par rapport au champ magnétique résiduel. Ainsi, on voit apparaître une zone pour le ratio R comprise entre 8 et 12 dans laquelle l'apport des aimants en flux magnétique est tangible pour la machine électrique tournante, sans toutefois dépasser la valeur de 12 pour laquelle on aboutirait à des volumes d'aimants qui seraient peu optimaux économiquement.

Au-delà de 12 l'accroissement du champ magnétique, et donc du flux, devient quasi nulle, ainsi, il devient trop couteux d'allonger la longueur totale d'aimant.

En choisissant un ratio R dans la plage 8-12, on peut dimensionner des aimants qui apportent un flux significatif au flux utile de la machine électrique tournante, tout en ne pénalisant pas le coût de la machine. Ainsi, pour déterminer la longueur totale d'aimant à utiliser pour une machine donnée, on commence par déterminer l'entrefer de la machine électrique tournante. C'est-à-dire la distance radiale entre une extrémité interne du stator et une extrémité externe des griffes du rotor. On détermine également les jeux induits, par exemple, par le procédé d'insertion des aimants dans le rotor. De manière générale, l'entrefer e et le jeu total $j_T$ sont déterminés avant le dimensionnement de la taille d'aimants. Ainsi, en fixant une valeur pour R, on obtient une valeur pour la longueur totale d'aimants.

Le choix d'une valeur pour le ratio R détermine la longueur des aimants sur le chemin magnétique utile de la machine. Il est également utile de déterminer les autres dimensions des aimants afin de choisir le volume des aimants de manière optimale.

En effet, l'incorporation d'aimants au sein du rotor modifie le volume de matière du rotor. En particulier, l'adjonction d'aimants au sein du noyau et des roues polaires du rotor modifie la réluctance totale de la machine électrique tournante.

La réluctance totale de la machine électrique tournante correspond à la résistance de la machine électrique tournante au passage du flux magnétique. De manière simplifiée, cette réluctance s'écrit comme le rapport de la force magnétomotrice sur le flux parcourant la machine électrique tournante. La force magnétomotrice correspond au produit du nombre de spires encerclées par le chemin du flux magnétique de la machine électrique tournante par le courant d'excitation traversant la bobine selon :

$$\Re e\ell = \frac{NI}{\Phi}.$$

Ainsi, le choix de volume d'aimant incorporé au sein du rotor doit se faire en sorte que cette réluctance soit la plus faible possible.

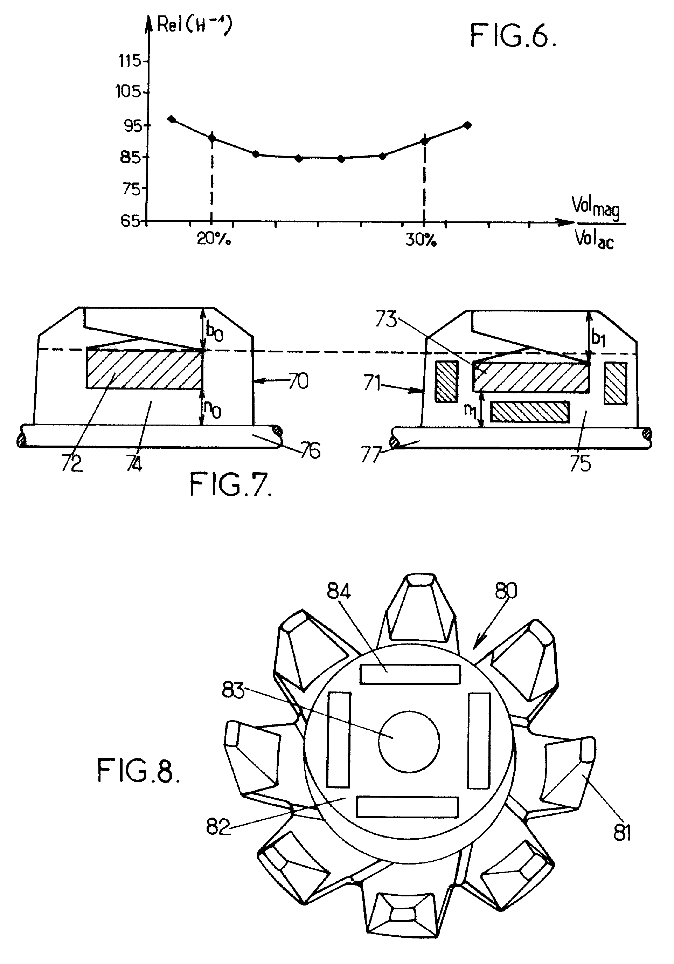

Sur la figure 6, on peut voir un graphique représentant l'évolution de la réluctance Rel de la machine électrique tournante en fonction du rapport du volume total d'aimants $Vol_{mag}$ présent au sein du rotor sur le volume de matière du rotor $Vol_{ac}$, excepté le volume d'aimants. Ce graphique peut, par exemple être obtenu par modélisation par éléments finis du rotor.

Ce graphique fait apparaître un minimum de réluctance pour une plage de valeurs pour le rapport de volume d'aimants sur le rapport de volume de matière de rotor compris entre 20% et 30%.

Ainsi, après avoir choisi un ratio R, puis un rapport entre volume d'aimants et volume de matière du rotor, on peut déterminer toutes les dimensions des aimants incorporées au rotor.

L'incorporation d'aimants dans le rotor avec le dimensionnement proposé par la présente invention permet de réduire la fenêtre de bobinage d'excitation. Cette fenêtre correspond au volume occupé par le bobinage d'excitation. En effet, les aimants A1, A2, A3 apportent un flux magnétique additionnel qui permet d'envisager de réduire le bobinage. Ainsi, la réduction du nombre de spires N aboutissant à une réduction de la force magnétomotrice est compensée par l'apport en flux des aimants.

Cette réduction du bobinage dans la machine électrique tournante selon l'invention, qui n'est donc pas préjudiciable pour les performances en puissance de la machine électrique tournante, permet de renforcer la base des griffes du rotor.

Sur la figure 7 on a représenté à la même échelle deux vues selon un plan de coupe longitudinal représentant respectivement deux parties de deux rotors 70 et 71. Le rotor 70 est un rotor ne comportant pas d'aimant de l'art antérieur. Le rotor 71 est un rotor selon la présente invention.

Chacun des rotors 70 et 71 comprend un bobinage respectivement 72, 73 qui est enroulé autour d'un noyau respectivement 74, 75. Chaque noyau 74, 75 a une épaisseur radiale $n_2$, $n_1$. Cette épaisseur est mesurée entre l'extrémité externe du noyau et l'extrémité externe de l'axe de rotation du rotor 76, 77.

Classiquement, dans l'art antérieur, pour des raisons de tenue mécanique, la largeur de base des griffes et l'épaisseur du noyau sont les mêmes.

Sur la figure 7 on peut constater que la fenêtre de bobinage est réduite pour le rotor 71 selon la présente invention. Ainsi, pour un rotor de mêmes dimensions globales, on peut constater que les griffes du rotor selon la présente invention ont une base $b_1$ plus large que la base $b_0$ des griffes du rotor 70 de l'art antérieur.

Cette large base permet de renforcer la tenue mécanique des griffes, lorsqu'elles sont soumises à des efforts de centrifugation par rotation du rotor autour de son axe.

De plus, cela permet d'augmenter le volume des griffes ce qui réduit leur saturation et améliore la conduction du flux magnétique utile de la machine électrique tournante. En effet, dans les rotors à griffes, un problème bien connu est le problème des fuites magnétiques interpolaires. Ces fuites sont notamment dues à la saturation des griffes qui incite le flux magnétique à passer d'une griffe d'une roue polaire à une griffe adjacente de l'autre roue polaire sans passer par le stator. En réduisant la saturation des griffes, on réduit ce problème de fuites interpolaires.

La figure 8 montre une roue polaire d'un rotor d'une machine électrique tournante selon la présente invention. Cette roue 80 comporte plusieurs griffes 81 disposées tout autour de la roue. On peut également voir sur la figure 8, un demi-noyau 82 qui s'étend à partir de la roue polaire 80 dans l'espace délimité par les surfaces intérieures des griffes 81 tournées vers l'axe du rotor. On peut voir sur la figure 8 un passage 83 permettant l'insertion de l'axe du rotor.

Le demi-noyau 82 comporte des usinages 84 destinés à recevoir des aimants parallélépipédiques.

Cette géométrie d'aimant est simple à réaliser, et les usinages nécessaires à l'incorporation de tels aimants dans le demi-noyau sont également faciles à réaliser.

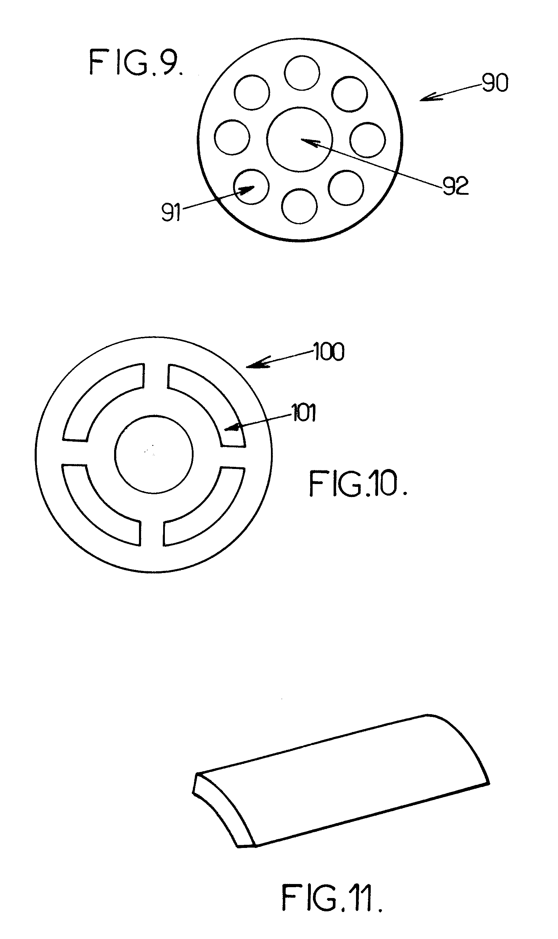

D'autres modes de réalisation sont possibles. On peut voir sur la figure 9 une représentation schématique d'une vue selon une coupe transversale d'un noyau 90. Dans ce mode de réalisation, les aimants 91 incorporés au noyau sont de forme cylindrique. Ainsi, le noyau 90 a une forme globalement en barillet. Les aimants cylindriques 91 sont disposés tout autour de l'axe 92 de la machine électrique tournante de sorte que l'inertie totale du rotor n'est pas pénalisée par la présence de ces aimants.

Dans une autre forme de réalisation montrée sur la figure 10, le noyau cylindrique 100 comporte des aimants 101 en forme de portion de tore. Ces aimants ont un rayon de courbure sensiblement égal au rayon du noyau. Ils sont disposés tout autour de l'axe de rotation du rotor.

Sur la figure 11, on peut voir une représentation en perspective d'un aimant en forme de portion de tore.

Bien entendu, la présente invention ne se limite pas aux formes de réalisation décrites ci-avant à titre d'exemple ; elle s'étend à d'autres variantes.

On peut envisager d'autres formes d'aimants. Il est également possible d'envisager d'autres formes de noyau pour le rotor. En particulier, on peut envisager que le noyau forme une pièce détachée des roues polaire, ou alors qu'il soit d'un tenant avec une roue polaires, ou encore qu'il soit formé de deux demi-noyaux chacun étant d'un tenant avec une roue polaire.

Les aimants peuvent être incorporés uniquement au noyau, ou encore uniquement aux roues polaires, ou encore être incorporés dans le noyau et dans les roues polaires.

On peut envisager différents matériaux pour les aimants, notamment les ferrites ou le Néodyme Fer Bore. De même, on peut envisager différents matériaux pour le rotor, notamment de l'acier comportant éventuellement du carbone.

La présente invention est envisageable pour des machines électriques tournantes à griffes ou à pôles saillants. Elle peut être utilisée dans le domaine automobile pour des démarreurs, des alternateurs ou des alterno-démarreurs. On peut envisager d'autres domaines dans lesquels on utilise des machines électriques tournantes.

**Revendications**

1. Machine électrique tournante comportant un stator (22) et un rotor (20) agencé au sein dudit stator de manière à pouvoir entrer en rotation autour d'un axe de rotation (21), ledit rotor comportant :

   deux roues polaires (23a, 23b),
   un noyau (28), autour duquel est enroulé un bobinage d'excitation,
   au moins un aimant (A1, A2, A3), disposé,
   au sein du noyau (28), de manière à ce que la direction d'alignement de ses pôles magnétiques soit axiale, ou
   au sein d'une roue polaire (23a, 23b), de manière à ce que la direction d'alignement de ses pôles magnétiques soit radiale,
   la machine étant **caractérisée en ce qu'**un ratio (R) de longueurs entre :

   une première longueur (L), correspondant à la longueur (L1, L2, L3) de l'aimant, la longueur étant axiale ou radiale selon la disposition de l'aimant au sein du noyau ou au sein d'une roue polaire, respectivement, d'une part et
   une deuxième longueur, correspondant à la somme entre
   les distances (j1, j2, j3, j4, j5, j6), axiales ou radiales, séparant des faces de l'aimant, d'une surface de noyau ou de roue polaire, directement en regard, selon la disposition de l'aimant et
   le double de la distance radiale (e) entre une extrémité radiale externe des griffes du rotor et une extrémité interne du stator d'autre part, est compris entre 8 et 12.

2. Machine électrique tournante selon la revendication 1, **caractérisée en ce que** le rotor comporte une pluralité d'aimants, et **en ce que** la première longueur (L), correspond à la somme des longueurs (L1, L2, L3) de chaque aimant, les longueurs étant axiales ou radiales selon la disposition de chaque aimant au sein du noyau ou au sein d'une roue polaire.

3. Machine électrique tournante selon l'une quelconque des revendications précédentes, **caractérisée en ce qu'**un ratio entre
   un premier volume (Vmag), correspondant au volume total d'aimant disposé au sein du rotor, d'une part et
   un deuxième volume (Vac), correspondant au volume de matière du rotor, excepté le volume d'aimant, d'autre part est compris entre 20% et 30%.

4. Machine électrique tournante selon l'une quelconque des revendications précédentes, **caractérisée en ce que**, les deux roues polaires (23a, 23b) comprennent chacune, une série de griffes polaires (25) ayant une section longitudinale, dans un plan perpendiculaire à l'axe de rotation, sensiblement trapézoïdale, et s'étendant suivant une direction axiale depuis une extrémité radiale externe de ladite roue polaire (23a), en direction de l'autre roue polaire (23b), et **en ce que**
   la longueur ($b_1$) de la base radiale la plus large de la section trapézoïdale est supérieure à la distance (ni) radiale entre une extrémité externe du noyau et une extrémité externe de l'axe de rotation du rotor.

5. Machine électrique tournante selon l'une quelconque des revendications précédentes, **caractérisée en ce que** la quantité de matière d'aimant est disposée de manière sensiblement régulière autour de l'axe de rotation.

6. Machine électrique tournante selon l'une quelconque des revendications précédentes, **caractérisée en ce que** l'aimant (A1, A2, A3) est complètement noyé dans le noyau (28) ou dans la roue polaire (23a, 23b).

7. Machine électrique tournante selon l'une quelconque des revendications précédentes, **caractérisée en ce que** l'aimant (A1, A2, A3) a une forme globalement parallélépipédique.

8. Machine électrique tournante selon l'une quelconque des revendications précédentes, **caractérisée en ce que** l'aimant (91) a une forme globalement cylindrique.

9. Machine électrique tournante selon l'une quelconque des revendications précédentes, **caractérisée en ce que** l'aimant (101) a une forme globale de portion de tore.

10. Machine électrique tournante selon l'une quelconque des revendications précédentes, **caractérisée en ce que** l'aimant (A1, A2, A3) est en terres rares.

11. Machine électrique tournante selon l'une quelconque des revendications précédentes, **caractérisée en ce que** l'aimant (A1, A2, A3) est en ferrites.

12. Machine électrique tournante selon l'une quelconque des revendications précédentes, **caractérisée en ce que** le noyau (28) et/ou la roue polaire (23a, 23b) sont/est en acier.

13. Machine électrique tournante selon l'une quelconque des revendications 1 à 12, **caractérisée en ce qu'**elle est agencée pour fonctionner en alternateur.

14. Machine électrique tournante selon l'une quelconque des revendications 1 à 12, **caractérisée en ce qu'**elle est agencée pour fonctionner en alterno-démarreur.

FIG.1.

FIG.2.

FIG.3.

Flx (µWb)

MAG
NO MAG

FIG.4.

FIG.5.

FIG.6.

FIG.7.

FIG.8.

FIG.9.

FIG.10.

FIG.11.